# EUROPÄISCHE PATENTSCHRIFT

(11) **EP 2 335 901 B1**
(45) Veröffentlichungstag und Bekanntmachung des Hinweises auf die Patenterteilung: **03.09.2014**
(21) Anmeldenummer: 11150656.4
(22) Anmeldetag: 26.03.2008
(51) Int. Cl.: B29C 45/00, B65D 8/14, B65D 81/26, B65D 81/38

(54) **Faltbehälter zum Transport von eisgekühlten Gütern**
Folding container for transporting ice-cooled cargo
Récipient pliable destiné au transport de marchandises congelées

(30) Priorität: 04.02.2008 DE 102008007340
(43) Veröffentlichungstag der Anmeldung: 22.06.2011
(62) Teilanmeldung aus: 08153329.1
(73) Patentinhaber: IFCO Systems GmbH, 82049 Pullach (DE)
(72) Erfinder: Ringler, Werner, 91085 Weisendorf (DE)
(74) Vertreter: Stöckeler, Ferdinand

(56) Entgegenhaltungen:
- EP-A- 0 071 467
- DE-A1- 10 137 328
- DE-U1- 20 311 478
- DE-U1- 29 907 229
- US-A- 4 044 910
- US-A- 4 118 265
- US-A1- 2002 070 215

## Beschreibung

Die Erfindung bezieht sich auf ein Verfahren zum Herstellen eines Faltbehälters aus Kunststoff nach dem Oberbegriff des Patentanspruchs 1.

Um frischen Seefisch oder andere eisgekühlte Nahrungsmittel zu verfrachten, ist es bisher üblich, die Güter -mit Eis bedeckt- in Styroporkisten zu verpacken und dann diese Kisten auf Paletten gestapelt zu transportieren. Obwohl Styropor leicht und gut thermo-isolierend ist, weist dieses Material einen großen Nachteil auf. Nach dem Transport kann Styropor nicht ausreichend gereinigt werden, d.h. bei zu schwacher Wasserspülung verbleiben unhygienische Reste an der Verpackung und bei zu starker Wasserspülung wird das Material beschädigt. Aus hygienischen Gründen kommt Styropor deshalb nur für Einweg-Behälter in Frage.

Die Aufgabe der Erfindung besteht deshalb darin, ein Verfahren zum Herstellen eines mehrwegtauglichen Faltbehälters insbesondere für frischen Seefisch oder für andere, eisgekühlte Nahrungsmittel und Güter vorzuschlagen.

Die Lösung liegt in einem Verfahren zum Herstellen eines Faltbehälters aus Kunststoff, dessen wesentliche Merkmale dem Anspruch 1 zu entnehmen sind. Zweckmäßige Weiterbildungen gehen aus den Ansprüchen 2 bis 11 hervor.

Der nach dem erfundenen Verfahren hergestellte Faltbehälter hat den grundlegenden Vorteil, dass er nach dem Transport so von Fischresten gereinigt werden kann, dass er hygienisch einwandfrei für einen neuen Transport als Mehrweg-Behälter zur Verfügung steht. Um den Rücktransport als Leergut zu vereinfachen und um den logistischen Mehrweg-Kreislauf kostengünstig zu schließen, ist der Behälter zusammenfaltbar. Solche Klappkisten sind an sich in verschiedenen Ausführungen gut bekannt, aber nicht in einer Ausführung, die sich zum Transport von frischen, eisgekühlten Nahrungsmitteln eignet. Um eine gute Thermo-Isolierung ähnlich dem Wärmeübergang bei dem bekannten Styropormaterial zu erzielen, sind zumindest die Seitenwände des Faltbehälters doppelwandig ausgebildet. Dabei wird die Luftschicht oder das Luftpolster zwischen den zwei Wänden durch ein angeschweißtes Fußstück eingeschlossen. Ferner sind für einen Abfluss des schmelzenden Eiswassers spezielle Öffnungen im Bodenbereich vorgesehen.

Aus der Druckschrift DE 602 05 881 T2 sind bereits Behälter aus Kunststoff bekannt. Es handelt sich vorzugsweise um faltbare Schalen oder Faltkisten; jedoch können nach diesem Stand der Technik auch nicht faltende Schalen verwendet werden. Die faltbaren Behälter machen es möglich, Massengüter zu transportieren, während die Rückgabe und Aufbewahrung der leeren Behälter nur einen geringen Raum einnimmt. Transportiert werden beispielsweise verderbliche Güter wie Nahrungsmittel, wobei nach diesem Stand der Technik eine Verpackung von Pommes Frites in gefrorenem Zustand im Vordergrund steht.

Als Behältermaterial ist Spritzguss-Kunststoff vorgesehen, also ein Material, das als Mehrwegmaterial geeignet ist, weil es in einer Säuberungsstation gereinigt werden kann, beispielsweise durch Dampf. Es ist auch als Rycyclingmaterial geeignet.

Die Stirnwände und die Seitenwände des bekannten Behälters weisen geschlossene Wandabschnitte auf. Auch die Verbindungsräume zwischen den Seitenwandabschnitten sind vorzugsweise geschlossen. Bevorzugt ist bei diesen senkrechten Nähten eine selbstausrichtende Schließverbindung mit einem Stift vorgesehen; andere Kupplungseinrichtungen zum gegenseitigen Kuppeln der Seitenwände und der Stirnwände sind vorsehbar, aber nicht erläutert.

Als Verbindung der Stirnwände und der Seitenwände mit dem Boden werden lippenartige Filmscharniere bevorzugt, d.h. ein Zusammenbauen und Trennen der Wand- und Bodenelemente soll aufgabengemäß vermieden werden. Andere Scharniere als derartige Filmscharniere sind in diesem Stand der Technik nur allgemein angesprochen.

An der Oberkante jeder Faltschale kann eine Folie aufgesiegelt, aufgeklebt oder aufgeschweißt sein. Die Folie ist vorzugsweise gas- und flüssigkeitsdicht, so wie die ganze Faltschale gas- und flüssigkeitsdicht sein soll.

Nicht angesprochen oder berücksichtigt sind in der technischen Lehre der DE 602 05 881 T2:
- eine doppelwandige, thermo-isolierende Ausführung der Wandabschnitte,
- irgendwelche Öffnungen, um einem Abschmelzen von Kühleis und einem Abführen von Schmelzflüssigkeit nach Außen Rechnung zu tragen, und
- eine stapelbare Ausführung der Faltkisten, um mehrere Transportbehälter auch dann übereinander stapeln zu können, wenn sie mit der Folie abgedeckt sind.

Aus der deutschen Auslegeschrift DE 1 221 958 B ist ferner eine zusammenlegbare Kiste mit auf den Boden umlegbaren Wänden und mit einem Klappdeckel bekannt. Die bekannte Faltkiste kann bei Nichtgebrauch, insbesondere bei Rückführung als Leergut, raumsparend zusammengelegt werden. Die Kiste kann aus Kunststoff bestehen, wobei die schwenkbaren Kistenteile einstückig über an sich bekannte Filmscharniere ineinander übergehen.

Die freien Oberkanten der Seitenwände können nach Außen und Unten abgewinkelt sein, um am oberen Rand der Kiste leistenförmige Hohlträger zu bilden. Im Übrigen sind die Seitenwände weder doppelwandig noch geschlossen, sondern weisen hoch liegende Öffnungen zur Lüftung und zur Materialersparnis auf.

Die Seiten- und Stirnwände greifen in aufgerichteter Stellung mit U-förmigen Abkantungen ineinander. Als letztes Glied der Aufrichtung wird eine dieser Wände nach oben geklappt und schließt die Eckverbindungen. Verriegelungen sind nicht vorgesehen; vielmehr übergreift als zusätzliche Sicherung der Deckel die freien Oberkanten der Kistenseitenwände. Über die Deckeloberseite nach oben vorstehende, am Deckel angebrachte Leisten bilden eine Arretierung für einen weiteren, auf dem ersten Kasten aufgestapelten Kasten. Die Stapelbarkeit ist in diesem Stand der Technik - wegen eines geteilten Deckels - kompliziert geregelt. Nicht nur bilden die zum Deckel gehörenden Leisten die Arretierung für die aufgestapelte Kiste, sondern der geteilte Deckel hat auch noch hochstehende Laschen, die in Verrippungen des jeweils aufgestapelten Kistenbodens eintauchen müssen.

Dieser technischen Lehre fehlt es an folgenden Merkmalen:
- keine Verriegelung von Seiten- und Stirnwänden untereinander, stattdessen angewiesen auf den Deckel zwecks Sicherung
- doppelwandige Ausführung als Hohlträgerleiste nur im obersten Bereich und nur zwecks Tragfähigkeit, nicht zwecks Thermo-Isolierung
- Seitenwände nicht geschlossen und nicht isolierend
- keine Abtropföffnungen im Bodenbereich
- keine Stapelbarkeit ohne den Deckel.

Auch der folgende weitere Stand der Technik kommt der Erfindung nicht näher:
WO 98/30454 A1 zeigt einen ähnlichen Faltbehälter mit Deckel.
WO 93/24378 A1 und US 3,360,180 A zeigen ähnliche Faltbehälter ohne Deckel.
US 5,704,193 A zeigt eine ähnliche Konstruktion eines Faltbehälters, aber aus Karton.

Eine Verriegelung nach dem Stand der Technik DE 101 37 328 B4 betrifft den bekannten Liftlock-Verschluß.

Die Druckschrift DE 10 2004 032 422 A1 betrifft eine bekannte Deckfolie.

Aus der DE 299 07 229 Us ist ein Kleinladungsträger bekannt, der einen rechteckigen Boden und an einander entgegengesetzten Rändern des Bodens angeordnete Wände aufweist. In dem Boden sind durchgehende Löcher vorgesehen. Der Boden und die Wände sind in einer Ausführungsform doppelwandig in Form von geschlossenen, insbesondere evakuierten Hohlräumen ausgebildet.

Ein Ausführungsbeispiel der Erfindung wird anhand der Patentzeichnungen erläutert. Es zeigen:

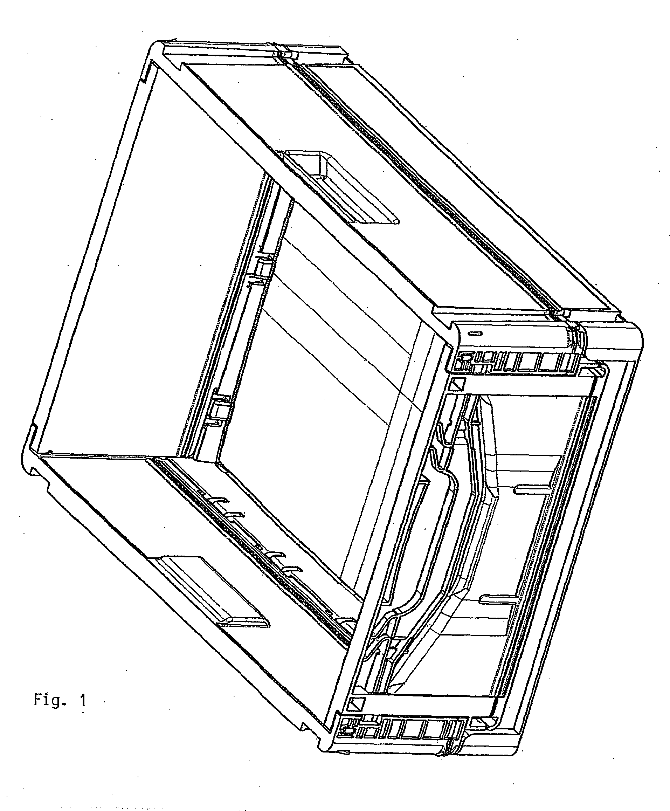

Fig. 1 ein Ausführungsbeispiel der Fischkiste in perspektivischer Ansicht;

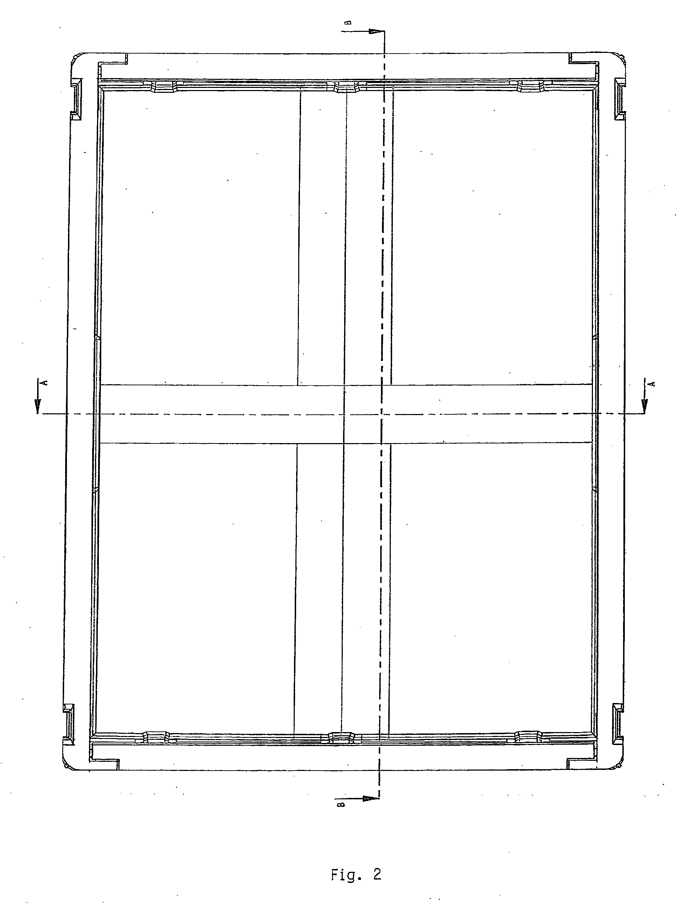

Fig. 2 ein Grundriss des Ausführungsbeispiels der Fischkiste gemäß Figur 1;
Fig. 3 eine Seitenansicht der Längsseite der Fischkiste gemäß Fig. 1;
Fig. 4 ein Längsschnitt B-B durch die Fischkiste gemäß Fig. 2;

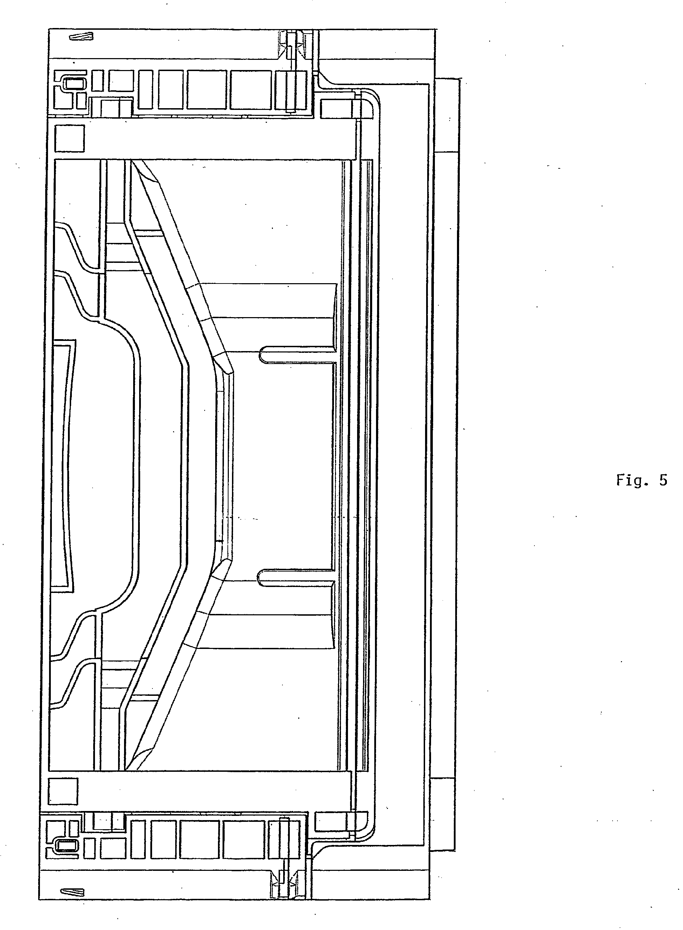

Fig. 5 eine Seitenansicht (relativ vergrößert) eines kurzen Seitenteils der Fischkiste gemäß Fig. 1;
Fig. 6 ein Querschnitt A-A durch die Fischkiste gemäß Fig. 2;

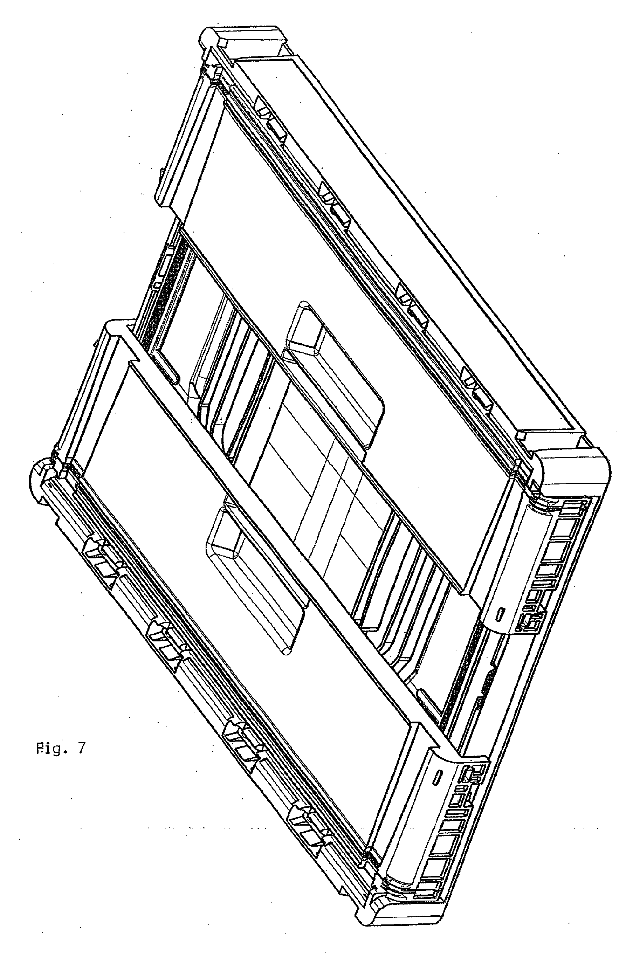

Fig. 7 eine perspektivische Ansicht der Fischkiste wie in Fig. 1, jedoch alle Seitenwände zusammengeklappt; und

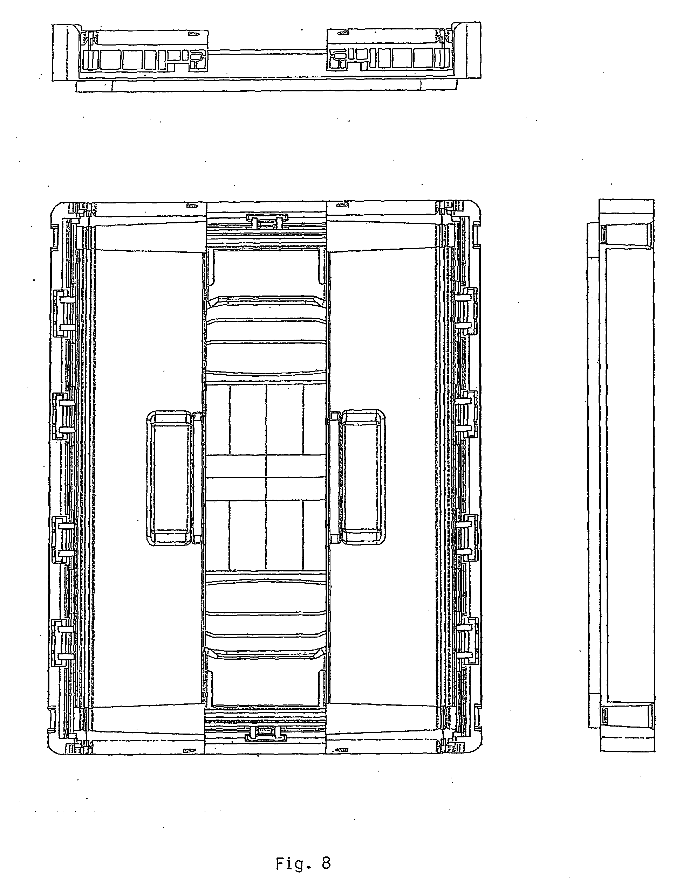

Fig. 8 einen Grundriss, eine Längsseitenansicht und Querseitenansicht der zusammengeklappten Fischkiste gemäß Fig. 7.

Der Boden des Faltbehälters ist leicht schalenförmig ausgeführt, d.h. die Bodenplatte ist sowohl bei den langen Seitenwänden als auch bei den kurzen Seitenwänden ansatzweise nach oben gezogen. Dieser Ansatz für die Scharniere der Seitenwände ist bei den langen Seitenwänden etwas weiter nach oben gezogen als bei den kurzen Seitenwänden, weil die kurzen Seitenwände zuerst eingeklappt werden, nämlich direkt auf die Bodenplatte, und die langen Seitenwände anschließend darüber eingeklappt werden, nämlich auf die kurzen Seitenwände.

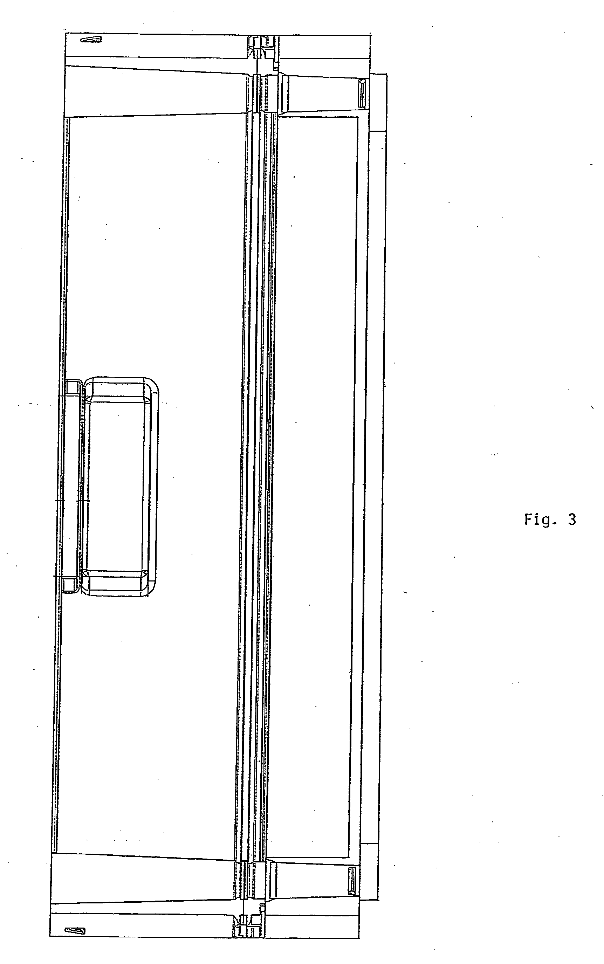

In die so entstandene Bodenschale sind an den vier Ecken vier Öffnungen eingelassen, welche die Eigenschaft haben, Flüssigkeit, die sich im Bereich der Bodenschale angesammelt hat, nach außen abzuführen (am besten zu erkennen in Fig. 3). Bei diesen Flüssigkeiten kann es sich um organische Flüssigkeit des transportierten Nahrungsmittels handeln, insbesondere aber um Schmelzwasser, welches von der Eiskühlung für das Nahrungsmittel herrührt. In der Praxis wird es sich um eine Mischung solcher Flüssigkeiten handeln.

Bei bestimmten Produkten wie zum Beispiel Fleisch kann es sinnvoll sein, die Abflussöffnungen vorübergehend mittels Stopfen oder Stöpseln zu verschließen, um ein Abtropfen nach außen vorübergehend zu verhindern. Die Stopfen können zum Beispiel als mitgelieferte Gummistöpsel ausgebildet sein.

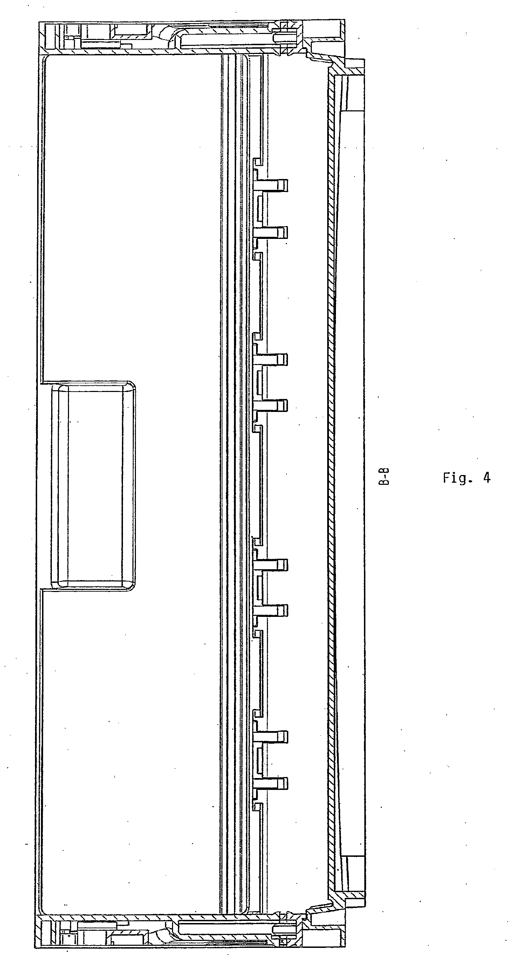

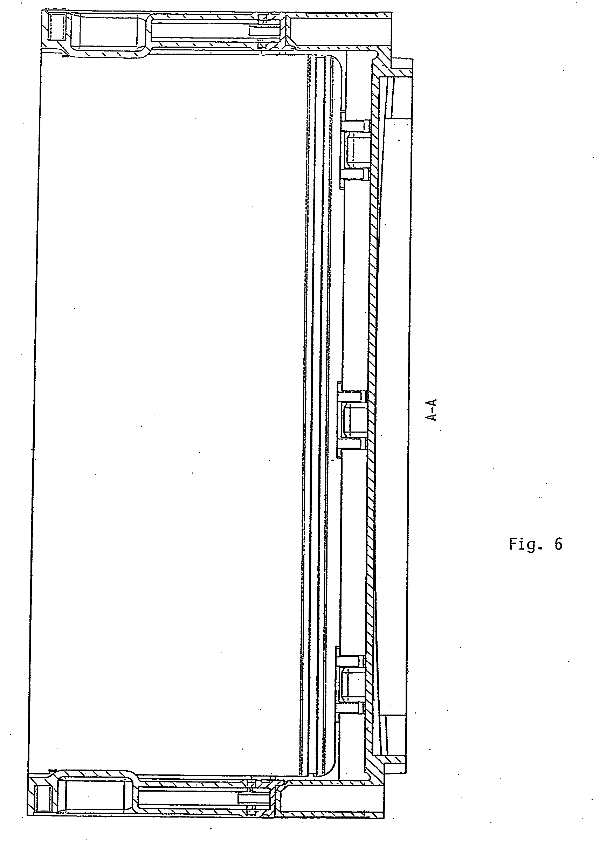

Die Bodenschale trägt an den ansatzweise hochstehenden Leisten Scharniermittel, an denen die Seitenwände angelenkt werden können. Im Bereich dieser Scharniere kann vorgesehen sein, dass die Fischkiste zusätzliche Öffnungen - zusätzlich zu den Ablauföffnungen - aufweist. Die Bodenschale trägt ferner an ihrer Unterseite einen umlaufenden rechteckigen Wulst, welcher einer Stapelung gleichartiger Fischkisten dient (am besten zu erkennen in Fig. 4 und 6). Der rechteckige Wulst einer höher gestapelten Kiste passt auf die rechteckige Oberseite einer unteren Fischkiste mit aufgerichteten Seitenwänden.

Die Bodenplatte weist bis auf die beschriebenen seitlichen Ablauföffnungen eine geschlossene Bodenausbildung auf. Die geschlossene Bodenausbildung verhindert sowohl ein Abtropfen von Flüssigkeit von einer höher gelegenen Fischkiste auf eine darunter befindliche Fischkiste; sie dient aber auch der Kühlung und Thermoisolierung ihres Inhalts. Die geschlossene Ausführung des Bodens kann einfach sein wie beim dargestellten Ausführungsbeispiel (unter dem Gesichtspunkt der Gewichtsersparnis), sie kann jedoch auch doppelwandig sein (unter dem Gesichtspunkt der Isolierung).

Als nächstes werden die Seitenwände beschrieben, die - wie bereits dargelegt - über Scharniere klappbar an die Bodenschafe in der richtigen Höhe angelenkt sind, um ein problemloses Einklappen für einen gereinigten Rücktransport oder für eine gereinigte Lagerung zu erlauben. Für einen Transport werden zunächst die langen Seitenwände aufgeklappt. Sie weisen eine geschlossene, im Wesentlichen doppelwandige Ausführung auf. Die doppelwandige, mit einem eingeschlossenen Luftpolster versehene Wandausführung erhöht entscheidend den Wärmeübergangswiderstand von dem eisgekühlten Transportgut zur Umgebungstemperatur. Die Doppelwandigkeit wird beim Spritzguss des Kunststoffs durch einen geeigneten Kern (nicht dargestellt) erzielt. Nach dem Zurückziehen dieses Spritzkerns wird ein Fußstück im heißen Zustand angeschweißt, wodurch das Luftpolster geschlossen wird.

Im Rahmen der doppelwandigen Ausführung ist an jeder Längsseite auch ein Handgriff zur Handhabung der Fischkiste eingelassen. Aus Gründen der Thermo-Isolierung ist dieser Handgriff jedoch nicht wie üblich mit einem offenen Durchgriff versehen, sondern gehorcht seinerseits dem Prinzip der geschlossenen Wandausführung.

Schließlich sind die langen Seitenwände in Richtung der senkrechten Verbindungsnähte mit Anschlägen einerseits und mit Rastaufnahmen oder Fallen andererseits, also mit Verriegelungsvorrichtungen für die kurzen Seitenwände versehen.

Die kurzen Seitenwände weisen ebenfalls Scharniere zur Verbindung mit der Bodenschale auf, welche Scharnier-Verbindungen durch Einrasten von Ösen der Seitenwände in die Ansatzstücke des Bodens entstehen. Eine kurze Seitenwand hat im Ausführungsbeispiel drei solche Verbindungsösen, während eine lange Seitenwand im Ausführungsbeispiel vier solche Verbindungsösen in Richtung Boden aufweist.

Die senkrechten Verbindungsnähte werden im aufgerichteten Zustand durch Anschlagleisten der kurzen Seitenteile in Verbindung mit einem Zentrierstift der kurzen Seitenteile gesichert, wobei die Zentrierstifte in kleine Öffnungen in den Anschlägen der langen Seitenteile eingreifen. Als ver- und entriegelbarer Verschluss - im Ausführungsbeispiel mit dunklerer Farbe dargestellt - wird ein so genannter Liftlock-Verschluss verwendet, wie er im Stand der Technik bekannt ist. Ein Anheben des Bügels gegen die Federkraft von vier Kunststofflaschen entriegelt den Verschluss. Darüber hinaus sind der Verschlussriegel der kurzen Seitenwand und die entsprechende Falle der langen Seitenwand aber auch so ausgebildet, dass sie bei einem Einschlagen der kurzen Seitenwand elastisch an der Haltestelle nachgeben. In der Praxis muss mit einer derartigen Handhabung des Einschlagens durch das logistische Unternehmen gerechnet werden.

Schließlich weisen die kurzen Seitenwände auch Einschubklammern auf, in denen ein Schild aus Papier, Karton oder Kunststoff eingesetzt werden kann, um die Kiste und ihren Inhalt zu markieren und zu bezeichnen.

In aufgerichteter Stellung ist die Oberseite der vier Seitenwände eben und deshalb geeignet, eine weitere Kiste gleicher Bauart aufgestapelt aufzunehmen. Die Formgebung an der Stapelstelle (oberer Rand bzw. Wulst der Bodenplatte) eignet sich besonders gut dafür, dass jeder Faltbehälter mittels einer Kunststofffolie (nicht dargestellt) abgedeckt wird, wie es im Stand der Technik bekannt ist. Die Stapelbarkeit des Faltbehälters wird durch dieses Abdecken, welches die Thermoisolierung erhöht, nicht beeinträchtigt. Die Verbindung der Folie mit dem oberen Rand des Behälters geschieht in bekannter Weise durch Aufsiegeln, Aufkleben oder Aufschweißen. Nach Gebrauch kann diese Folie leicht entfernt werden, bevor der Behälter vom Transportgut entleert, anschließend gereinigt, zusammengeklappt und zur weiteren Verwendung gestapelt und gelagert oder rücktransportiert wird. Gelegentlich wird es auch genügen, dass nur der oberste Behälter eines Stapels mit einer Folie abgedeckt ist.

Die Formgebung des hier geschützten Faltbehälters für den Transport von Frischfisch oder anderen eisgekühlten Gütern wird im Wesentlichen dadurch erzeugt, dass ein Spritzgusswerkzeug (nicht dargestellt) einen wesentlichen Teil des Kunststoffbehälters formmäßig bestimmt. Durch Kunststoffspritzguss entsteht insbesondere die Bodenschale mit ihren Öffnungen und mit ihren Scharnieransätzen. Durch Kunststoffspritzguss entstehen auch die Seitenteile, insbesondere deren doppelwandige Ausführung mit Hilfe eines Spritzgusskerns, wobei anschließend nach dem Zurückziehen des Spritzgusskerns das genannte Fußstück, das die Scharniere trägt, an die Doppelwand angeschweißt wird. Beim kurzen Seitenteil wird ebenfalls das Fußstück an die Doppelwand angeschweißt und anschließend der Liftlock-Verschluss, der getrennt hergestellt wurde, federnd eingesetzt.

## Patentansprüche

1. Verfahren zum Herstellen eines Faltbehälters für den Transport von beispielsweise Frischfisch oder anderen eisgekühlten Gütern wie Fleisch, Käse oder dergleichen, wobei der Faltbehälter im Wesentlichen durch Kunststoffspritzguss von Seitenwänden und Boden hergestellt ist, wobei die Seitenwände eine doppelwandige Ausführung mit einem geschlossenen Luftpolster aufweisen, und wobei im Bodenbereich Ablauföffnungen für den Durchtritt von Flüssigkeit, insbesondere von Schmelzwasser, vorgesehen sind, wobei das Verfahren durch folgende Schritte gekennzeichnet ist:
Erzeugen der doppelwandigen Ausführung mit dem Luftpolster durch einen Kern beim Spritzguss, und
Schließen des Luftpolsters durch Anschweißen eines Fußstücks nach dem Zurückziehen des Kerns im heißen Zustand, wobei das Fußstück Scharniere trägt, die den Boden und die Seitenwände klappbar verbinden.

2. Verfahren nach Anspruch 1, **dadurch gekennzeichnet, dass** nur die Seitenwände, und nicht der Boden, die doppelwandige Ausführung mit dem geschlossenen Luftpolster aufweisen.

3. Verfahren nach Anspruch 1 oder 2, **dadurch gekennzeichnet, dass** Zusatzöffnungen im Bereich von Scharnieren vorgesehen sind, welche den Boden und die Seitenwände klappbar verbinden.

4. Verfahren nach Anspruch 1 bis 3, **dadurch gekennzeichnet, dass** die Ablauföffnungen so angebracht sind, dass sie Flüssigkeit, insbesondere Schmelzwasser aus der Eiskühlung, aus dem Bodenbereich des Faltbehälters nach Aussen abtropfen lassen.

5. Verfahren nach Anspruch 4, **gekennzeichnet durch** optionale Stopfen oder Stöpsel, mit denen die Ablauföffnungen bei Bedarf verschlossen werden können, um ein Abtropfen von beispielsweise verschmutztem Schmelzwasser zu verhindern.

6. Verfahren nach Anspruch 1 bis 5, **dadurch gekennzeichnet, dass** ein sogenannter Liftlock-Verschluss vorgesehen ist, um die klappbaren Seitenwände in aufgerichteter Stellung gegeneinander zu verriegeln, und dass dieser Verschluss beschädigungsfrei gelöst werden kann sowohl durch die bekannte Liftlock-Bewegung als auch alternativ durch ein sogenanntes Einschlagen der kurzen Seitenwände.

7. Verfahren nach einem der Ansprüche 1 bis 6, **dadurch gekennzeichnet, dass** er stapelbar ausgeführt ist, d.h. dass ein gleichartiger Faltbehälter unverrutschbar aufgesetzt oder untergesetzt werden kann.

8. Verfahren nach 1 bis 7, **dadurch gekennzeichnet, dass** im oberen Bereich des Faltbehälters eine Deckfolie aufsiegelbar, aufklebbar oder aufschweissbar ist.

9. Verfahren nach Anspruch 1 bis 8, bei dem eine Spritzgussform zur Herstellung eines Faltbehälters oder zur Herstellung zumindest eines wesentlichen Teils dieses Faltbehälters mittels Kunststoffspritzguss verwendete wird, das durch eine Formgebung im Fußbereich des Faltbehälters, die nach Beendigung des Spritzgussvorgangs ein Anschweißen eines Fußstücks zur Erzielung eines geschlossenen Luftpolsters zulässt, gekennzeichnet ist.

10. Verfahren nach Anspruch 9, bei dem die Spritzgussform eine ebene Formgebung im oberen Randbereich des Faltbehälters aufweist, derart, dass sie ein späteres Abdecken des Faltbehälters mittels einer Deckfolie zulässt, ohne die Stapelbarkeit des Faltbehälters zu beeinträchtigen.

11. Verfahren nach Anspruch 10, bei dem die Formgebung des Faltbehälters im oberen Bereich ein späteres Aufsiegeln, Aufkleben oder Aufschweissen der Deckfolie ermöglicht.

## Claims

1. Method of producing a collapsible container for transporting, for example, fresh fish or other ice-cooled goods such as meat, cheese or the like, the collapsible container being manufactured essentially by plastic injection molding of side walls and a base, wherein the side walls comprise a double-walled implementation comprising a closed air cushion, and wherein discharge openings for the passage of liquid, in particular melt water, are provided in the base area, said method being **characterized by** the following steps:
creating the double-walled implementation comprising the air cushion by a core in injection molding, and
closing the air cushion by welding-on a footing once the core has been withdrawn in a hot state, the footing bearing hinges which join the base and the side walls in a foldable manner.

2. Method as claimed in claim 1, **characterized in that** only the side walls, and not the base, comprise the double-walled implementation comprising the closed air cushion.

3. Method as claimed in claim 1 or 2, **characterized in that** in the area of hinges, additional openings are provided which join the base and the side walls in a foldable manner.

4. Method as claimed in any of claims 1 to 3, **characterized in that** the discharge openings are mounted such that they allow liquid, in particular melt water resulting from the ice cooling, to be drained to the outside from the base area of the collapsible container.

5. Method as claimed in claim 4, **characterized by** optional plugs and stoppers with which the discharge openings may be closed off as needed so as to prevent draining of dirty melt water, for example.

6. Method as claimed in any of claims 1 to 5, **characterized in that** a so-called liftlock closure is provided to mutually lock the foldable side walls in an upright orientation, and **in that** said closure may be released without damage both by the known liftlock movement and, alternatively, by so called bending-in of the short side walls.

7. Method as claimed in any of claims 1 to 6, **characterized in that** it is implemented to be stackable, i.e. that a collapsible container of the same type may be placed upon or below it in a non-slip manner.

8. Method as claimed in any of claims 1 to 7, **characterized in that** a cover foil may be sealed on, glued on or welded on in the top area of the collapsible container.

9. Method as claimed in any of claims 1 to 8, wherein an injection mold is used for manufacturing a collapsible container or for manufacturing at least a major part of said collapsible container by means of plastic injection molding, which is **characterized by** shaping, in the foot area of the collapsible container, which, once the injection molding process is terminated, allows a footing to be welded on for achieving a closed air cushion.

10. Method as claimed in claim 9, wherein the injection mold comprises a planar shaping in the top edge area of the collapsible container, such that it allows covering the collapsible container by a cover foil at a later point in time without impairing the stackability of the collapsible container.

11. Method as claimed in claim 10, wherein the shaping of the collapsible container in the top area allows the cover foil to be sealed on, glued on or welded on at a later point in time.

## Revendications

1. Procédé de fabrication d'un récipient pliable destiné au transport par exemple de poisson frais ou d'autres marchandises refroidies par de la glace, telles que viande, fromage ou autres, dans lequel le récipient pliable est fabriqué substantiellement par moulage par injection de matière plastique des parois latérales et du fond, lesdites parois latérales présentant une réalisation à double paroi avec un coussin d'air fermé, et dans lequel sont prévues, dans la zone de fond, des ouvertures d'écoulement pour le passage de liquide, en particulier d'eau de fonte, le procédé étant **caractérisé par** les étapes suivantes consistant à:
générer la réalisation à double paroi avec le coussin d'air par un noyau lors du moulage par injection, et
fermer le coussin d'air par soudage d'un socle après le retrait du noyau à l'état chaud, le socle portant des charnières qui relient de manière pliable le fond et les parois latérales.

2. Procédé selon la revendication 1, **caractérisé par le fait que** seules les parois latérales, et non pas le fond, présentent la réalisation à double paroi avec le coussin d'air fermé.

3. Procédé selon la revendication 1 ou 2, **caractérisé par le fait que** des ouvertures additionnelles sont prévues à l'endroit des charnières qui relient de manière pliable le fond et les parois latérales.

4. Procédé selon la revendication 1 à 3, **caractérisé par le fait que** les ouvertures d'écoulement sont placées de sorte qu'elles laissent s'égoutter vers l'extérieur le liquide, en particulier l'eau de fonte du refroidissement par de la glace, de la zone de fond du récipient pliable.

5. Procédé selon la revendication 4, **caractérisé par** des bouchons ou des tampons optionnels par lesquels les ouvertures d'écoulement peuvent en cas de besoin être obturés, pour éviter des écoulements par exemple d'eau de fonte contaminée.

6. Procédé selon la revendication 1 à 5, **caractérisé par le fait qu'**il est prévu une soi-disant obturation 'liftlock' pour verrouiller entre elles les parois latérales repliables en position redressée, et que cette obturation peut être dégagée sans dégâts tant par le mouvement 'liftlock' connu que, alternativement, par un soi-disant enfoncement des parois latérales courtes.

7. Procédé selon l'une des revendications 1 à 6, **caractérisé par le fait qu'**il est réalisé empilable, c'est-à-dire qu'un récipient pliable similaire peut être placé au-dessus ou au-dessous sans risque de glisser.

8. Procédé selon la revendication 1 à 7, **caractérisé par le fait que** dans la zone supérieure du récipient pliable peut être adhérée, collée ou soudée une feuille de recouvrement.

9. Procédé selon la revendication 1 à 8, dans lequel est utilisé un moule d'injection pour la fabrication d'un récipient pliable ou pour la fabrication d'au moins une partie substantielle de ce récipient pliable au moyen d'un moulage par injection de matière plastique qui est **caractérisée par** une mise en forme dans la partie de pied du récipient pliable qui permet, après achèvement du processus de moulage par injection, un soudage d'un socle pour obtenir un coussin d'air fermé.

10. Procédé selon la revendication 9, dans lequel le moule d'injection présente une forme plane dans la zone de bord supérieur du récipient pliable, de sorte qu'elle permette un recouvrement ultérieur du récipient pliable à l'aide d'une feuille de recouvrement, sans limiter l'aptitude à l'empilement du récipient pliable.

11. Procédé selon la revendication 10, dans lequel la mise en forme du récipient pliable dans la zone supérieure permet une adhérence, un collage ou un soudage ultérieur de la feuille de recouvrement.
